# EUROPEAN PATENT APPLICATION

(11) **EP 4 800 452 A1**
(43) Date of publication of application: **02.09.2026**
(21) Application number: 24887388.7
(22) Date of filing: 12.06.2024
(51) Int. Cl.: G02B 6/42, H04Q 11/00, H04B 10/60

(54) **OPTICAL DEVICE, OPTICAL MODULE AND OPTICAL COMMUNICATION SYSTEM**

(30) Priority: 10.11.2023 CN 202311517131
(71) Applicant: Huawei Technologies Co., Ltd., Shenzhen, Guangdong 518129 (CN)
(72) Inventor: LI, Yangjie, Shenzhen, Guangdong 518129 (CN); ZENG, Yujie, Shenzhen, Guangdong 518129 (CN); ZHANG, Pengbo, Shenzhen, Guangdong 518129 (CN); DONG, Hao, Shenzhen, Guangdong 518129 (CN); GAO, Fei, Shenzhen, Guangdong 518129 (CN)
(74) Representative: Pfenning, Meinig & Partner mbB
(86) International application number: PCT/CN2024/098768
(87) International publication number: WO 2025/097764

(57) **Abstract**

This application provides an optical device, an optical module, and an optical communication system. The optical device provided in this application includes a tube body and a first receiving package structure, a second receiving package structure, and a first emitting package structure that are mounted on the tube body. A first optical receiving chip configured to receive light of a first band is packaged in the first receiving package structure. A second optical receiving chip configured to receive light of a second band and a third optical receiving chip configured to receive light of a third band are packaged in the second receiving package structure. A first optical emitting chip configured to emit light of a fourth band and a second optical emitting chip configured to emit light of a fifth band are packaged in the first emitting package structure. The optical device provided in this application can integrate three receiving optical paths and three emitting optical paths, and can implement compatibility between three generations of network services, to implement smooth upgrade between different generations of network services. In this way, an optical module, as well as an optical communication system, in which the optical device is used can be better compatible with different generations of network services.

## Description

### CROSS-REFERENCE TO RELATED APPLICATIONS

This application claims priority to Chinese Patent Application No. 202311517131.2, filed with the China National Intellectual Property Administration on November 10, 2023 and entitled "OPTICAL DEVICE, OPTICAL MODULE, AND OPTICAL COMMUNICATION SYSTEM", which is incorporated herein by reference in its entirety.

### TECHNICAL FIELD

This application relates to the field of optical device technologies, and in particular, to an optical device, an optical module, and an optical communication system.

### BACKGROUND

In a long-term evolution process of passive optical networks (passive optical networks, PONs), GPON optical device products and 10G PON optical device products are successively put into commercial use, achieving a leap from a 100 Mbit/s network to a 1000 Mbit/s network. During upgrade from a GPON to a 10G PON, vendors in the industry integrate two generations of services: the GPON and the 10G PON, to effectively implement smooth upgrade between the two generations of services.

With continuous increase of optical network requirements, currently, 50G PON requirements emerge. The 50G PON standard is gradually clear, and it is possible to put a 50G PON into commercial use in a short period of time. During upgrade from current optical device products compatible with the two generations of services: the GPON and the 10G PON, to 50G PON optical device products, the vendors in the industry mainly focus on compatibility between two generations of services: the 10G PON and the 50G PON. However, currently, there are still a large quantity of GPON optical device products in the market, and the GPON optical device products cannot completely exit the market in a short period of time. In view of this, providing an optical device that is compatible with three generations of services: the GPON, the 10G PON, and the 50G PON, is an urgent problem to be resolved by a person skilled in the art.

### SUMMARY

This application provides an optical device, an optical module, and an optical communication system, to implement compatibility between a plurality of generations of PON services, thereby implementing smooth upgrade between different generations of PON services.

According to a first aspect, this application provides an optical device. The optical device includes a tube body, a first receiving package structure, a second receiving package structure, and a first emitting package structure. The first receiving package structure includes a first tube base, a first tube cap, and a first optical receiving chip, the first tube cap is disposed on the first tube base, the first tube cap and the first tube base form a first accommodation cavity, the first tube cap is mounted on the tube body, an end portion that is of the first tube cap and that is connected to the tube body includes a first light receiving port, the first optical receiving chip is accommodated in the first accommodation cavity, and the first optical receiving chip is configured to receive light of a first band from the first light receiving port. The second receiving package structure includes a second tube base, a second tube cap, a second optical receiving chip, and a third optical receiving chip, the second tube cap is disposed on the second tube base, the second tube cap and the second tube base form a second accommodation cavity, the second tube cap is mounted on the tube body, an end portion that is of the second tube cap and that is connected to the tube body includes a second light receiving port, the second optical receiving chip and the third optical receiving chip are accommodated in the second accommodation cavity, the second optical receiving chip is configured to receive light of a second band from the second light receiving port, and the third optical receiving chip is configured to receive light of a third band from a third light receiving port. The first emitting package structure includes a third tube base, a third tube cap, a first optical emitting chip, and a second optical emitting chip, the third tube cap is disposed on the third tube base, the third tube cap and the third tube base form a third accommodation cavity, the third tube cap is mounted on the tube body, an end portion that is of the third tube cap and that is connected to the tube body includes a first optical emitting port, the first optical emitting chip and the second optical emitting chip are accommodated in the third accommodation cavity, the first optical emitting chip is configured to emit light of a fourth band to the first optical emitting port, and the second optical emitting chip is configured to emit light of a fifth band to the first optical emitting port.

The optical device provided in this application can integrate three receiving optical paths and three emitting optical paths, and can implement compatibility between three generations of network services, to implement smooth upgrade between different generations of network services. In this way, an optical module, as well as an optical communication system, in which the optical device is used can be better compatible with different generations of network services. In addition, in the optical device, three receiving chips are packaged by using two receiving package structures: the first receiving package structure and the second receiving package structure, and the first emitting chip and the second emitting chip are packaged by using the first emitting package structure. This helps implement a miniaturization design of the optical device.

To meet a requirement of the optical device for emitting three channels of light, in a possible implementation of this application, the first emitting package structure further includes a third optical emitting chip, the third emitting chip is accommodated in the third accommodation cavity, and the third optical emitting chip is configured to emit light of a sixth band to the first optical emitting port. In this design, three optical emitting chips are packaged in one emitting package structure, so that integration of the optical device can be effectively improved, facilitating reduction in a size of the optical device.

In another possible implementation of this application, the optical device further includes a second emitting package structure, the second emitting package structure includes a fourth tube base, a fourth tube cap, and a third emitting chip, the fourth tube cap is disposed on the fourth tube base, the fourth tube cap and the fourth tube base form a fourth accommodation cavity, the fourth tube cap is mounted on the tube body, an end portion that is of the fourth tube cap and that is connected to the tube body includes a second optical emitting port, the third emitting chip is accommodated in the fourth accommodation cavity, and the third emitting chip is configured to emit light of a sixth band to the second optical emitting port. In this design, three emitting chips are packaged by using the first emitting package structure and the second emitting package structure. This not only makes the optical device emit three channels of light, but also helps improve design flexibility of the optical device.

Frequency bands of light emitted by the emitting chips are not specifically limited in this application, and may be combined based on a specific design. For example, in a possible implementation, the light of the fourth band includes light with a wavelength of 1340 nm to 1344 nm, the light of the fifth band includes light with a wavelength of 1480 nm to 1490 nm, and the light of the sixth band includes light with a wavelength of 1575 nm to 1580 nm. Alternatively, in another possible implementation, the light of the fourth band includes light with a wavelength of 1340 nm to 1344 nm, the light of the fifth band includes light with a wavelength of 1575 nm to 1580 nm, and the light of the sixth band includes light with a wavelength of 1480 nm to 1490 nm. Alternatively, in another possible implementation, the light of the fourth band includes light with a wavelength of 1480 nm to 1490 nm, the light of the fifth band includes light with a wavelength of 1575 nm to 1580 nm, and the light of the sixth band includes light with a wavelength of 1340 nm to 1344 nm.

In a possible implementation of this application, the first tube cap of the first receiving package structure and the second tube cap of the second receiving package structure are mounted on a tube wall of the tube body. In other words, both the first receiving package structure and the second receiving package structure are disposed on a side surface of the optical device. This helps reduce a structural size of the optical device.

In a possible implementation of this application, the third tube cap of the first emitting package structure may be mounted at an end portion of the tube body. In other words, an axis line of the first reflective package structure coincides with an axis line of a principal optical axis of the optical device. In this way, when the light of the fourth band or the light of the fifth band includes the light with the wavelength of 1340 nm to 1344 nm, emitted light of a 50G PON can be transmitted along the principal optical axis of the optical device. This helps enhance a high frequency feature of the optical device.

In addition, the third tube cap of the first emitting package structure may be further mounted on the tube wall of the tube body, to improve disposing flexibility of the optical device.

In a possible implementation of this application, the optical device further includes an optical interface. The optical interface is mounted at an end portion of the tube body, and the optical interface is configured to receive light from outside of the optical device. The light received by the optical interface includes the light of the first band, the light of the second band, and the light of the third band.

To make the light that is of the first band and that is received by the optical interface enter the first receiving package structure through the first light receiving port of the first tube cap, and the light of the second band and the light of the third band that are received by the optical interface enter the second receiving package structure through the second light receiving port of the second tube cap, in a possible implementation of this application, the optical device further includes a first demultiplexing assembly and a second demultiplexing assembly; the first demultiplexing assembly is disposed closer to the optical interface than the second demultiplexing assembly in an axial direction of the tube body; the first demultiplexing assembly and the second demultiplexing assembly are mounted on the tube wall of the tube body; the second demultiplexing assembly is configured to reflect, to the first demultiplexing assembly, the light received by the optical interface; the first demultiplexing assembly is configured to reflect, to the first light receiving port of the first tube cap, the light that is of the first band and that is reflected by the second demultiplexing assembly; and the first demultiplexing assembly is configured to reflect, to the second light receiving port of the second tube cap, the light of the second band and the light of the third band that are reflected by the second demultiplexing assembly.

When the first demultiplexing assembly is specifically disposed, in a possible implementation of this application, the first demultiplexing assembly includes a first support, a first filter, and a second filter; the tube wall includes a first mounting hole; the first support is mounted in the first mounting hole; the first filter is disposed on the first support; the first filter is configured to transmit the light of the first band, and is configured to reflect the light of the second band and the light of the third band to the second light receiving port of the second tube cap; the second filter is disposed closer to the optical interface than the first filter; and a projection of the second filter on the first tube cap covers at least a part of the first light receiving port, so that the second filter may be configured to reflect, to the first light receiving port, the light that is of the first band and that is transmitted by the first filter. In this way, in a process of preparing the optical device, an assembly angle of the first filter may be adjusted by rotating the first support relative to the tube body, so that an adjustment tolerance of the three channels of received light can be effectively reduced, to improve optical splitting precision of the optical device.

In this application, the second filter may also be disposed on the first support. In this case, in the process of preparing the optical device, assembly angles of the first filter and the second filter may be synchronously adjusted by rotating the first support. This helps improve optical splitting effect of the optical device.

In a possible implementation of this application, the second demultiplexing assembly includes a second support and a third filter. The tube wall of the tube body further includes a second mounting hole, the first mounting hole and the second mounting hole are adjacently arranged in the axial direction of the tube body, and the second support is mounted in the second mounting hole. In addition, the third filter is disposed on the second support, and the third filter is configured to reflect, to the first filter, the light received by the optical interface. In this way, in the process of preparing the optical device, an assembly angle of the third filter may be adjusted by rotating the second support, to implement effective optical splitting on the received light by the optical device.

Alternatively, the second support may not be disposed on the second demultiplexing assembly. In this case, the second demultiplexing assembly includes only the third filter, and the third filter is disposed on an inner wall of the tube cavity of the tube body, so that the third filter is configured to reflect, to the first filter, the light received by the optical interface. In this way, a structure of the optical device can be effectively simplified.

In a possible implementation of this application, an acute included angle between a plane on which the first filter is located and a plane perpendicular to an axis line of the tube body is less than or equal to 25°, and an acute included angle between a plane on which the third filter is located and the plane perpendicular to the axis line of the tube body is less than or equal to 25°. In this way, a spacing between the first demultiplexing assembly and the second demultiplexing assembly in each direction can be small, thereby helping reduce the size of the optical device.

To split the light received by the optical interface, in another possible implementation of this application, the optical device further includes a zblock assembly and a sixth filter. The sixth filter is disposed closer to the optical interface than the zblock assembly in the axial direction of the tube body, the zblock assembly is mounted in a tube cavity of the tube body, the sixth filter is disposed on an inner wall of the tube cavity of the tube body, and a projection of the sixth filter on the first tube cap covers at least a part of the first light receiving port. The zblock assembly is configured to reflect, to the sixth filter, the light that is of the first band and that is received by the optical interface, and is configured to reflect, to the second light receiving port of the second tube cap, the light of the second band and the light of the third band that are received by the optical interface; and the sixth filter is configured to reflect, to the first light receiving port of the first tube cap, the light that is of the first band and that is reflected by the zblock assembly. In this way, a multi-reflection feature of the zblock assembly may be used to implement a narrowband band-stop optical splitting function of the zblock assembly, to enhance optical splitting isolation performance of the optical device, thereby improving optical splitting precision of three channels of received light of different bands.

In a possible implementation of this application, the light of the first band includes light with a wavelength of 1284 nm to 1288 nm, the light of the second band includes light with a wavelength of 1290 nm to 1330 nm, and the light of the third band includes light with a wavelength of 1260 nm to 1280 nm. In this case, the first receiving package structure is a 50G PON receiving package structure, and the second receiving package structure is a GPON and 10G PON two-in-one receiving package structure.

In a possible implementation of this application, the first receiving package structure may be disposed closer to the optical interface than the second receiving package structure. In this way, when the light of the first band includes the light of 1284 nm to 1288 nm, the light of the first band may be preferentially isolated through splitting, so that an overall size of the optical device can be effectively reduced, to meet a miniaturization design requirement of the optical device.

In a possible implementation of this application, to make the light of the second band and the light of the third band enter the second receiving package structure through the second light receiving port of the second tube cap, the optical device further includes a fourth filter. The fourth filter is disposed on the inner wall of the tube cavity of the tube body, a projection of the fourth filter on the second tube cap covers at least a part of the second light receiving port, and the fourth filter is configured to reflect the light of the second band and the light of the third band to the second light receiving port.

According to a second aspect, this application further provides an optical module. The optical module includes a housing and the optical device according to the first aspect. The optical device is accommodated in the housing, the housing has an optical port, and the optical port is connected to a communication optical cable. In this case, the optical device may be connected to the communication optical cable through the optical port, so that the optical device receives light. The optical module provided in this application can implement compatibility between network services, to implement smooth upgrade between different generations of network services.

According to a third aspect, this application further provides an optical communication system. The optical communication system includes an optical line terminal device and an optical network unit. The optical line terminal device is connected to the network unit through a passive distribution network component. The optical line terminal device includes the optical device according to the first aspect or the optical module according to the second aspect, or the optical network unit includes the optical device according to the first aspect or the optical module according to the second aspect. The optical communication system provided in this application can implement compatibility between three generations of network services, to implement smooth upgrade between different generations of network services.

### BRIEF DESCRIPTION OF DRAWINGS

FIG. 1 is a diagram of a structure of an optical communication system according to an embodiment of this application;
FIG. 2 is a diagram of a structure of an optical module according to an embodiment of this application;
FIG. 3 is a diagram of a structure of an optical device according to an embodiment of this application;
FIG. 4 is an A-A sectional view of the optical device shown in FIG. 3;
FIG. 5a to FIG. 5c are diagrams of several structures of a first demultiplexing assembly according to an embodiment of this application;
FIG. 6a to FIG. 6g are diagrams of a structure of a first support shown in FIG. 5a from another perspective;
FIG. 7a and FIG. 7b are diagrams of several structures of a second demultiplexing assembly according to an embodiment of this application;
FIG. 8 is a diagram of a process of preparing an optical device according to an embodiment of this application;
FIG. 9 is a diagram of a method of preparing an optical device according to an embodiment of this application;
FIG. 10 is a diagram of a simplified structure of the optical device shown in FIG. 4;
FIG. 11 is a sectional view of another structure of an optical device according to an embodiment of this application;
FIG. 12 is a sectional view of another structure of an optical device according to an embodiment of this application;
FIG. 13 is a diagram of another structure of an optical device according to an embodiment of this application; and
FIG. 14 is a diagram of another structure of an optical device according to an embodiment of this application.

### Reference numerals:

100: optical line terminal device; 200: optical network unit; 300: passive optical distribution network device;
1: optical module; 101: housing; 1011: electrical port; 1012: optical port; 102: optical device; 1021: tube body; 10211: first mounting hole;
10212: second mounting hole; 1022: first receiving package structure; 10221: first tube base; 10222: first tube cap;
102221: first light receiving port; 1023: second receiving package structure; 10231: second tube base; 10232: second tube cap;
102321: second light receiving port; 1024: optical interface; 1025: first lens; 10261: first demultiplexing assembly; 102611: first support;
1026111: first mounting portion; 10261111: first mounting surface; 10261112: first support surface; 1026112: first adjustment portion;
10261121a: square hole; 10261121b: inner hexagon hole; 10261121c: cross-shaped hole; 10261121d: line-shaped hole;
10261121e: outer hexagonal structure; 102612: first filter assembly; 1026121: first filter; 1026122: second filter;
10262: second demultiplexing assembly; 102621: second support; 1026211: second mounting portion; 1026212: second adjustment portion;
102622: second filter assembly; 1026221: third filter; 10263: zblock assembly; 10264: sixth filter;
10271: fourth filter; 10272: transmission filter; 10273: fifth filter; 1028: first emitting package structure;
10281: third tube base; 10282: third tube cap; 102821: first optical emitting port; 1029: second emitting package structure;
10291: fourth tube base; 10292: fourth tube cap; 102921: second optical emitting port; 1030: second lens; 1031: first isolator; and
1032: second isolator; 1033: third emitting package structure; 103: optical module drive circuit; 2: rotation tool.

### DESCRIPTION OF EMBODIMENTS

To make the objectives, technical solutions, and advantages of this application clearer, the following further describes this application in detail with reference to the accompanying drawings. However, example implementations may be implemented in a plurality of forms, and are not to be construed as being limited to implementations described herein. Identical reference numerals in the accompanying drawings denote identical or similar structures. Therefore, repeated description thereof is omitted. Expressions of positions and directions in embodiments of this application are described by using the accompanying drawings as examples. However, changes may also be made as required, and all the changes fall within the protection scope of this application. The accompanying drawings in embodiments of this application are merely used to illustrate relative position relationships and do not represent an actual scale.

It should be noted that specific details are set forth in the following descriptions for ease of understanding this application. However, this application can be implemented in a plurality of manners different from those described herein, and a person skilled in the art can perform similar promotion without departing from the connotation of this application. Therefore, this application is not limited to the following disclosed specific embodiments.

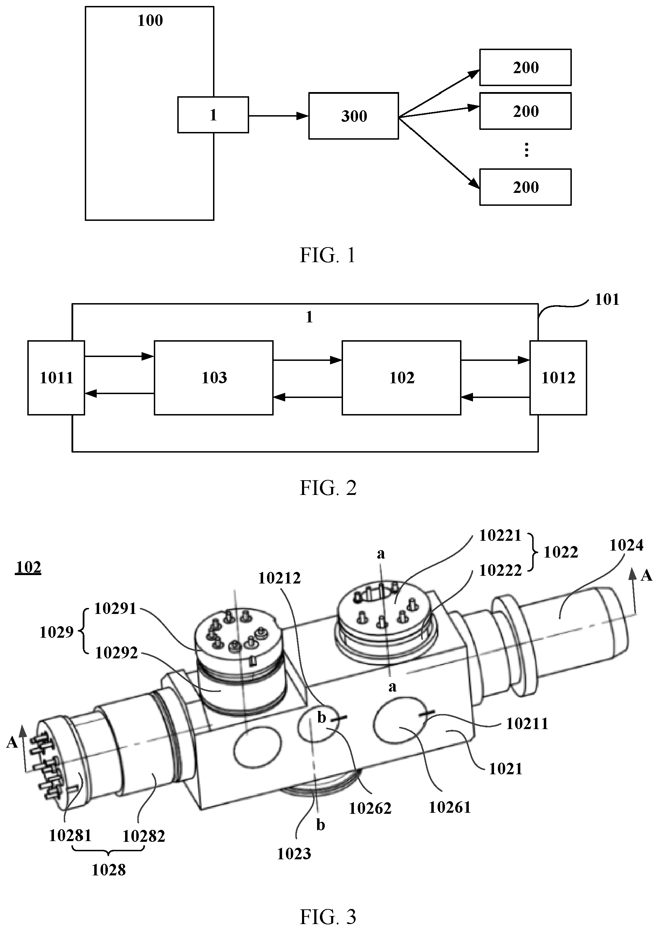

To facilitate understanding of an optical device, an optical module, and an optical communication system provided in this application, the following first describes application scenarios of the optical device, the optical module, and the optical communication system. With development of communication technologies, applications in which signal transmission is implemented by using optical signals are increasingly extensive. FIG. 1 is a diagram of a structure of an optical communication system according to an embodiment of this application. The optical communication system may include an optical line terminal device 100 and an optical network unit 200. The optical line terminal device 100 may include an optical module 1, and the optical module 1 may be connected to a passive optical distribution network device 300 through a communication optical cable. The passive optical distribution network device 300 may be configured to distribute light beams emitted by the optical module 1 to a plurality of optical network units 200, so that the optical line terminal device 100 is connected to the optical network units 200 through the passive optical distribution network device 300.

It may be understood that the optical communication system may include a plurality of optical line terminal devices 100, and an optical signal may be exchanged between optical line terminal devices 100 connected through the communication optical cable. In addition, each optical line terminal device 100 may include one or more optical modules 1, and the one or more optical modules 1 may be disposed on a board of the optical line terminal device 100.

FIG. 2 is a diagram of a structure of an optical module according to an embodiment of this application. An optical module 1 usually includes a housing 101, an optical device 102, and an optical module drive circuit 103. The optical device 102 and the optical module drive circuit 103 are accommodated in the housing 101. The housing 101 includes an electrical port 1011 and an optical port 1012. The optical module drive circuit 103 is connected to the electrical port 1011. In addition, the optical module drive circuit 103 is connected to the optical device 102. If the optical port 1012 is connected to the communication optical cable, the optical device 102 is connected to the communication optical cable through the optical port 1012.

In the optical module 1, the optical module drive circuit 103 may provide an electrical signal for the optical device 102, the optical device 102 may convert the electrical signal into an optical signal, and the optical signal may be transmitted through the communication optical cable connected to the optical port 1012. In addition, the optical device 102 may receive an external optical signal through the optical port 1012, convert the received optical signal into an electrical signal, and transmit the electrical signal to the optical module drive circuit 103 for processing. It can be learned that the optical device 102 is a key element for the optical module 1 to implement optical signal transmission.

Currently, in the PON field, to meet increasing optical network requirements, there are optical device products that are compatible with two generations of services: a GPON and a 10G PON, and there are optical device products that are compatible with two generations of services: the 10G PON and a 50G PON. However, in a current market status, there are still a large quantity of GPON optical device products, and the GPON optical device products cannot completely exit the market in a short period of time. In other words, three generations of services: the GPON, the 10G PON, and the 50G PON will coexist in a long period of time.

In view of this, the optical device provided in embodiments of this application integrates three receiving optical paths and three emitting optical paths, to implement compatibility between the three generations of services: the GPON, the 10G PON, and the 50G PON, thereby implementing smooth upgrade between different generations of PON services.

Currently, a package of the optical device mainly includes several forms such as a coaxial package, a box (Box) package, and a chip on board (chip on board, COB) package. A transistor-outline (transistor-outline, TO) package is a basic package structure of a coaxial-type optical device (coaxial-type package optical sub-assembly).

In this application, a package form of the optical device is not limited. To make the optical device integrate three receiving optical paths and three emitting optical paths, the optical device needs to integrate a plurality of packages. A TO package is used as an example. The TO package usually includes an emit-type package and a receive-type package. One TO package may include one laser diode (laser diode, LD) or one photo diode (photo diode, PD), to perform single-channel/single-wavelength optical signal emitting or receiving. Alternatively, one TO package may include a plurality of LDs or a plurality of PDs, to perform multi-channel/multi-wavelength optical signal emitting or receiving.

In this application, a package structure including a plurality of LDs is referred to as an all-in-one emitting package structure, and a package structure including a plurality of PDs is referred to as an all-in-one receiving package structure. For example, a package structure including two LDs may be referred to as a two-in-one emitting package structure, and a package structure including two PDs may be referred to as a two-in-one receiving package structure.

It may be understood that integration of a plurality of LDs or a plurality of PDs into one package structure can effectively control a package size of the optical device, thereby meeting a miniaturization design requirement of the optical device. Based on this, the optical device provided in embodiments of this application may include an all-in-one emitting package structure and an all-in-one receiving package structure. In addition, in this application, disposing positions of the plurality of package structures in the optical device may be adjusted, to form optical paths in a plurality of transmission directions in the optical device, so as to implement a multi-directional transmission function of the optical device. This helps minimize a volume of the optical device. The following describes in detail the optical device provided in embodiments of this application with reference to the accompanying drawings.

FIG. 3 is a diagram of a structure of the optical device according to an embodiment of this application. The optical device 102 includes a tube body 1021, a first receiving package structure 1022, and a second receiving package structure 1023. Both the first receiving package structure 1022 and the second receiving package structure 1023 are mounted on a tube wall of the tube body 1021. In addition, an axis line a-a of the first receiving package structure 1022 does not overlap an axis line b-b of the second receiving package structure 1023. However, in some other possible embodiments of this application, the axis line a-a of the first receiving package structure 1022 may alternatively coincide with the axis line b-b of the second receiving package structure 1023 based on a specific design requirement of the optical device, and this should also be understood as falling within the protection scope of this application.

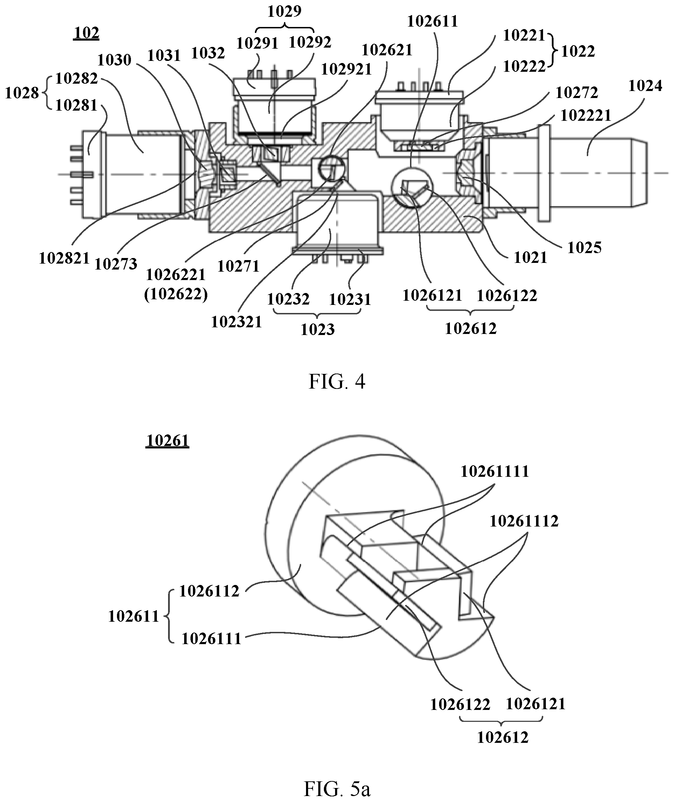

In the optical device 102 shown in FIG. 3, the first receiving package structure 1022 may be a single receiving package structure. When the first receiving package structure 1022 is specifically disposed, refer to FIG. 4. FIG. 4 is an A-A sectional view of the optical device 102 shown in FIG. 3. The first receiving package structure 1022 may include a first tube base 10221, a first tube cap 10222, and a first optical receiving chip (not shown in FIG. 4). The first tube cap 10222 is disposed on the first tube base 10221, the first tube cap 10222 and the first tube base 10221 form a first accommodation cavity, and the first tube cap 10222 is mounted on the tube wall of the tube body 1021, so that the first receiving package structure 1022 is mounted on the tube wall of the tube body 1021. The first optical receiving chip is accommodated in the first accommodation cavity. In addition, an end portion that is of the first tube cap 10222 and that is connected to the tube body 1021 includes a first light receiving port 102221, and the first optical receiving chip may be configured to receive light of a first band from the first light receiving port 102221. For example, if the light of the first band includes light with a wavelength of 1284 nm to 1288 nm, the first receiving package structure 1022 is a 50G PON receiving package structure.

The second receiving package structure 1023 is a two-in-one receiving package structure, and a second optical receiving chip and a third optical receiving chip (not shown in FIG. 4) may be packaged in the second receiving package structure 1023. During specific implementation, the second receiving package structure 1023 further includes a second tube base 10231 and a second tube cap 10232. The second tube cap 10232 is disposed on the second tube base 10231, the second tube cap 10232 and the second tube base 10231 form a second accommodation cavity, and the second tube cap 10232 is mounted on the tube wall of the tube body 1021, so that the second receiving package structure 1023 is mounted on the tube wall of the tube body 1021. The second optical receiving chip is accommodated in the second accommodation cavity. In addition, an end portion that is of the second tube cap 10232 and that is connected to the tube body includes a second light receiving port 102321, the second optical receiving chip is configured to receive light of a second band from the second light receiving port 102321, and the third optical receiving chip is configured to receive light of a third band from the second light receiving port 102321. The light of the second band may include light with a wavelength of 1290 nm to 1330 nm, and the light of the third band may include light with a wavelength of 1260 nm to 1280 nm. In this case, the second receiving package structure 1023 is a GPON and 10G PON two-in-one receiving package structure.

Still as shown in FIG. 3, the optical device 102 may further include an optical interface 1024. The optical interface 1024 is connected to an end portion of the tube body 1021. The optical interface 1024 may be connected to a communication optical cable, to receive light from outside of the optical device 102 through the communication optical cable. It may be understood that, to make the light received by the optical interface 1024 be transmitted to the tube body 1021 along a specified optical path, a collimation lens may be disposed at a joint between the optical interface 1024 and the tube body 1021. During specific implementation, still as shown in FIG. 4, the optical device 102 includes a first lens 1025. The first lens 1025 is accommodated in a tube cavity of the tube body 1021, and the first lens 1025 is connected to a part that is of the tube body 1021 and that is connected to the optical interface 1024, where a connection manner may be but is not limited to welding, bonding, clamping, or the like. In this way, the first lens 1025 is disposed adjacent to the optical interface 1024. In addition, the first lens 1025 and the optical interface 1024 are coaxially disposed, so that the first lens 1025 can collimate the light received by the optical interface 1024. In another possible embodiment of this application, the first lens 1025 may alternatively be integrated with the optical interface 1024, to improve integration of the optical device 102.

Because the light received by the optical interface 1024 includes light of a plurality of bands, to make light of different bands enter corresponding receiving package structures based on specified optical paths, optical splitting needs to be performed on the light of the bands. Currently, optical splitting performed on the light by a coaxial-type optical device is mainly implemented through demultiplexing and multiplexing. To be specific, the light of the bands are reflected and transmitted through a plurality of filters, so that the light of the bands can be transmitted along specific optical paths. In this way, optical splitting is implemented on the light of the bands. However, because wavelengths of light of the bands are close, an optical splitting spacing between the light of the bands is small. To implement effective optical splitting on the light of the bands, the filter is required to have a high spectral steepness, and an assembly tolerance of the filter in the optical device is required to be small. Therefore, the spectral steepness designed for the filter, the assembly tolerance of the filter, and the like are key factors that restrict integration of more optical paths in the optical device. To overcome this problem, in a process of preparing the optical device 102 provided in this embodiment of this application, an adjustable demultiplexing assembly is disposed, so that assembly angles of the plurality of filters are adjustable, to reduce assembly tolerances of the filters, thereby implementing effective optical splitting on the light of the bands. During specific implementation, still as shown in FIG. 4, the optical device 102 provided in this application further includes a first demultiplexing assembly 10261 and a second demultiplexing assembly 10262. The first demultiplexing assembly 10261 and the second demultiplexing assembly 10262 are mounted on the tube wall of the tube body 1021. In the process of preparing the optical device 102, the first demultiplexing assembly 10261 and the second demultiplexing assembly 10262 may rotate relative to the tube body 1021, to adjust transmission directions of the light of the first band, the light of the second band, and the light of the third band that are received by the optical device 102 through the optical interface 1024, so that the first demultiplexing assembly 10261 can reflect, to the first light receiving port 102221 of the first tube cap 10222 of the first receiving package structure 1022, the light that is of the first band and that is received by the optical device 102 through the optical interface 1024, and reflect, to the second light receiving port 102321 of the second tube cap 10232 of the second receiving package structure 1023, the light of the second band and the light of the third band that are received by the optical device 102 through the optical interface 1024.

When the first demultiplexing assembly 10261 and the second demultiplexing assembly 10262 are specifically disposed, in the optical device 102 shown in FIG. 3, the first demultiplexing assembly 10261 is disposed closer to the optical interface 1024 than the second demultiplexing assembly 10262 in an axial direction of the tube body 1021.

FIG. 5a is a diagram of a structure of the first demultiplexing assembly 10261 according to an embodiment of this application. The first demultiplexing assembly 10261 includes a first support 102611 and a first filter assembly 102612. The first support 102611 is mounted on the tube body 1021 shown in FIG. 3, and the first filter assembly 102612 is disposed on the first support 102611. In the process of preparing the optical device 102, the first support 102611 may rotate relative to the tube body 1021 to drive the first filter assembly 102612 to rotate, to adjust an angle of each filter in the first filter assembly 102612.

In the optical device 102 provided in this embodiment of this application, a specific disposing form of the first demultiplexing assembly 10261 is not limited. The first support 102611 includes a first mounting portion 1026111 and a first adjustment portion 1026112 that are connected to each other, and the first mounting portion 1026111 may be disposed as a rod-shaped structure. In this application, a cross-sectional shape of the first mounting portion 1026111 is not limited. For example, the first mounting portion 1026111 may be a part of a cylindrical rod, and the first mounting portion 1026111 and the first adjustment portion 1026112 are coaxially disposed, provided that the first mounting portion 1026111 and the first adjustment portion 1026112 can rotate synchronously. In addition, the first mounting portion 1026111 may include a first mounting surface 10261111, and the first filter assembly 102612 is mounted on the first mounting surface 10261111.

In addition, in the first demultiplexing assembly 10261 shown in FIG. 5a, the first mounting portion 1026111 further includes a first support surface 10261112, and the first mounting surface 10261111 and the first support surface 10261112 may be adjacently disposed at any included angle, provided that the first support surface 10261112 can support the first filter assembly 102612, to improve mounting precision and mounting convenience of mounting the first filter assembly 102612 and the first mounting surface 10261111, thereby improving a mounting tolerance of the first filter assembly 102612.

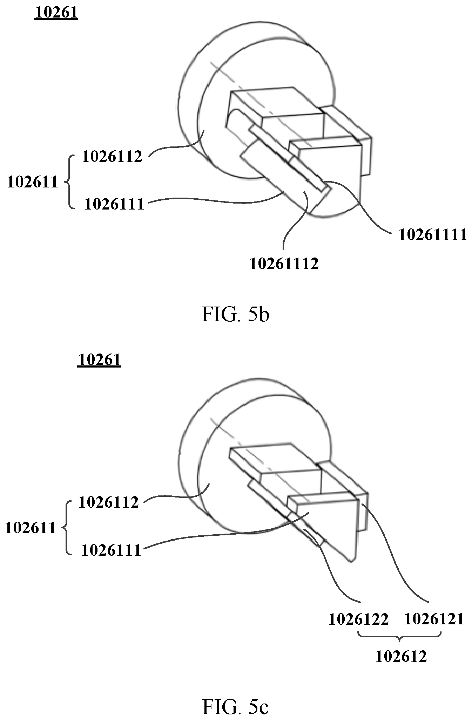

FIG. 5b is a diagram of another structure of the first demultiplexing assembly 10261 according to an embodiment of this application. The figure may be used to show another manner of disposing the first mounting portion 1026111. In comparison with the first demultiplexing assembly 10261 shown in FIG. 5a, the first mounting portion 1026111 of the first demultiplexing assembly 10261 shown in FIG. 5b is correspondingly provided with the first supporting surface 10261112 only at a part of the first mounting surface 10261111. This can effectively simplify a structure of the first support 102611.

For another example, in the first demultiplexing assembly 10261 shown in FIG. 5c, no first support surface 10261112 is disposed on the first mounting portion 1026111 of the first demultiplexing assembly 10261, to further simplify the structure of the first support 102611.

The first demultiplexing assemblies 10261 shown in FIG. 5a to FIG. 5c are merely examples for describing a manner of disposing the first mounting portion 1026111 of the first support 102611. In the optical device 102 provided in this application, the manner of disposing the first mounting portion 1026111 is not limited thereto, and examples are not enumerated one by one herein, but it should be understood that the disposing manner falls within the protection scope of this application.

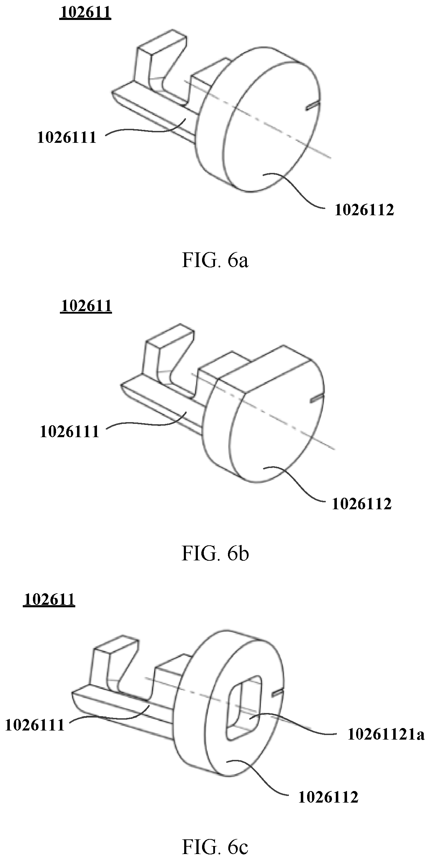

FIG. 6a is a diagram of a structure of the first support 102611 shown in FIG. 5a from another perspective. The figure may be used to show a manner of disposing the first adjustment portion 1026112. The first adjustment portion 1026112 may be of a cylindrical structure. In addition, as shown in FIG. 3, the tube body 1021 may be provided with a first mounting hole 10211, and the first adjustment portion 1026112 may be mounted in the first mounting hole 10211, so that the first support 102611 is mounted in the first mounting hole 10211. In this way, in the process of preparing the optical device, the first support 102611 may rotate relative to the tube body 1021 in the first mounting hole 10211, to drive the first filter assembly 102612 to rotate relative to the tube body 1021. In this way, the mounting angle of the first filter assembly 102612 is adjusted.

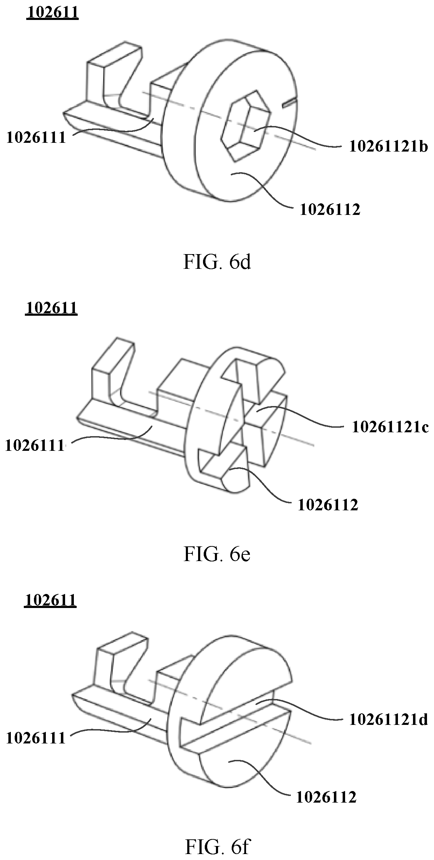

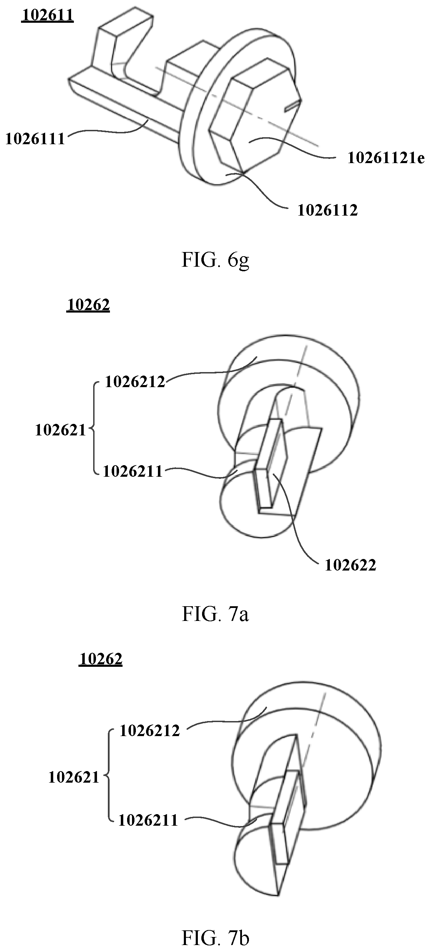

In this application, in addition to the disposing manner shown in FIG. 6a, another possible disposing manner may be used for the first adjustment portion 1026112 of the first support 102611. For example, in the first support 102611 shown in FIG. 6b, a cross-sectional shape of the first adjustment portion 1026112 includes an arc, and the arc is a major arc. In this case, the first adjustment portion 1026112 is a part of a cylindrical structure, and can reduce a material of the first support 102611, to reduce costs of the optical device 102. For another example, in the first support 102611 shown in FIG. 6c, a square hole 10261121a is further provided at a center of the first adjustment portion 1026112, and the first adjustment portion 1026112 may adapt to a rotation tool having a square plug connector. For another example, in the first support 102611 shown in FIG. 6d, an inner hexagon hole 10261121b is further provided at a center of the first adjustment portion 1026112, and the first adjustment portion 1026112 may adapt to a rotation tool having an outer hexagonal plug connector. For another example, in the first support 102611 shown in FIG. 6e, the first adjustment portion 1026112 is provided with a cross-shaped hole 10261121c, and may adapt to a rotation tool having a cross-shaped plug-connection portion. For another example, in the first support 102611 shown in FIG. 6f, the first adjustment portion 1026112 is provided with a line-shaped hole 10261121d, and may adapt to a rotation tool having a line-shaped plug-connection portion. For another example, in the first support 102611 shown in FIG. 6g, in addition to the cylindrical structure, the first adjustment portion 1026112 further includes an outer hexagonal structure 10261121e disposed on an end face of the cylindrical structure. In this case, the first adjustment portion 1026112 may adapt to a rotation tool having an inner hexagon hole. On this basis, other variants of the disposing manner of the first adjustment portion 1026112 of the first support 102611 should be understood as falling within the protection scope of this application, and are not described one by one herein.

In this application, the second demultiplexing assembly 10262 may be disposed with reference to the first demultiplexing assembly 10261. For example, FIG. 7a and FIG. 7b are diagrams of several structures of the second demultiplexing assembly 10262 according to an embodiment of this application. The second demultiplexing assembly 10262 includes a second support 102621 and a second filter assembly 102622. The second support 102621 is rotatably connected to the tube body 1021 shown in FIG. 3. The second filter assembly 102622 is disposed on the second support 102621. In this way, in a process in which the second support 102621 rotates relative to the tube body 1021, the second filter assembly 102622 may be driven to rotate, to adjust an angle of each filter in the second filter assembly 102622.

Still as shown in FIG. 7a and FIG. 7b, the second support 102621 includes a second mounting portion 1026211 and a second adjustment portion 1026212 that are connected to each other. The second mounting portion 1026211 may be disposed with reference to the first mounting portion 1026111, provided that the mounting requirement of the second filter assembly 102622 can be met. The second adjustment portion 1026212 may be disposed with reference to the first adjustment portion 1026112. Details are not described herein again. In addition, as shown in FIG. 3, a second mounting hole 10212 may be further provided on the tube body 1021 of the optical device 102, and the second mounting hole 10212 and the first mounting hole 10211 are adjacently arranged in the axial direction of the tube body 1021. In this case, the second adjustment portion 1026212 may be mounted in the second mounting hole 10212, so that the second support 102621 is mounted in the second mounting hole 10212. In this way, in the process of preparing the optical device, the second support 102621 may rotate relative to the tube body 1021 in the second mounting hole 10212, to drive the second filter assembly 102622 to rotate relative to the tube body 1021. In this way, the mounting angle of the second filter assembly 102622 is adjusted.

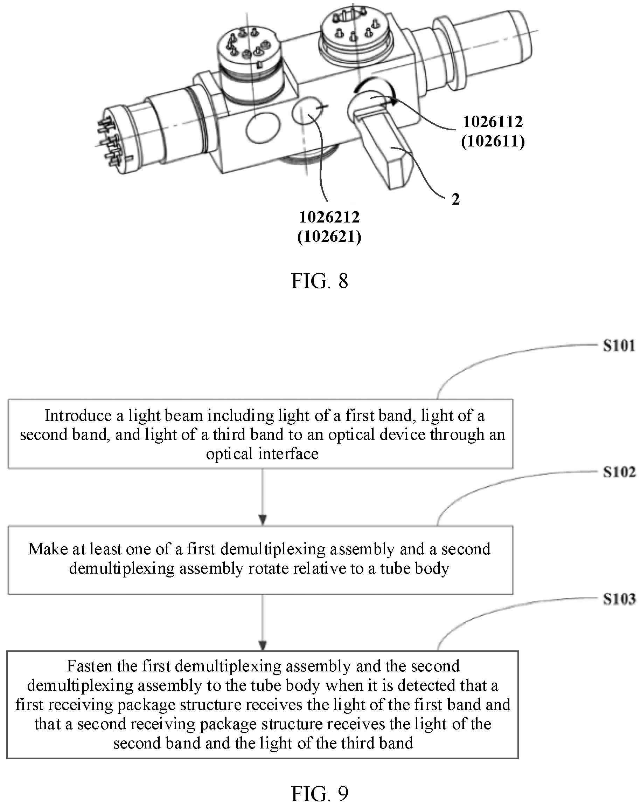

In addition, a type of the rotation tool is not limited in this application. For example, FIG. 8 is a diagram of the process of preparing the optical device according to an embodiment of this application. A rotation tool 2 may be, for example, an adjustment apparatus like a screwdriver. In this way, an adapted screwdriver may be selected based on specific disposing manners of the first adjustment portion 1026112 of the first support 102611 and the second adjustment portion 1026212 of the second support 102621 described above. In this way, the screwdriver is plug-connected to the first adjustment portion 1026112 or the second adjustment portion 1026212, and rotation of the screwdriver drives the first support 102611 and the second support 102621 to rotate relative to the tube body.

In some other possible embodiments of this application, the rotation tool 2 may alternatively be, for example, an adjustment apparatus like a nozzle having a suction function, so that the adjustment apparatus sucks the first adjustment portion 1026112 of the first support 102611 or the second adjustment portion 1026212 of the second support 102621. In addition, rotation of the adjustment apparatus drives the first support 102611 and the second support 102621 to rotate relative to the tube body.

The foregoing is merely example descriptions of the rotation tool used to implement rotation of the first support 102611 and the second support 102621 relative to the tube body 1021 in this application. Other rotation tools that can be used to drive the first support 102611 and the second support 102621 to rotate relative to the tube body 1021 should also be understood as falling within the protection scope of this application, and are not described one by one herein.

It can be learned from the foregoing descriptions of the first demultiplexing assembly 10261 and the second demultiplexing assembly 10262 that the first filter assembly 102612 is disposed on the first support 102611, and the second filter assembly 102622 is disposed on the second support 102621. In this case, in the process in which the first support 102611 rotates relative to the tube body 1021, the first filter assembly 102612 may be driven to rotate relative to the tube body 1021, to adjust an assembly angle of the first filter assembly 102612 in the tube body 1021. Similarly, in the process in which the second support 102621 rotates relative to the tube body 1021, the second filter assembly 102622 may be driven to rotate relative to the tube body 1021, to adjust an assembly angle of the second filter assembly 102622 in the tube body 1021.

In this application, a quantity of filters in the first filter assembly 102612 may be selected based on light transmission and reflection requirements of the first filter assembly 102612. For example, in the optical device shown in FIG. 4, the first filter assembly 102612 includes the first filter 1026121 and the second filter 1026122, the first filter 1026121 and the second filter 1026122 may be disposed on the mounting surface of the first support 102611, and the second filter 1026122 is disposed closer to the optical interface 1024 than the first filter 1026121. In this way, in the process of preparing the optical device, the assembly angles of the first filter 1026121 and the second filter 1026122 may be adjusted by rotating the first support 102611.

In this embodiment of this application, the first filter 1026121 is configured to transmit the light of the first band. A projection of the second filter 1026122 on the first tube cap 10222 of the first receiving package structure 1022 covers at least a part of the first light receiving port 102221. In addition, the second filter 1026122 is configured to reflect, to the first light receiving port 102221, the light that is of the first band and that is transmitted by the first filter 1026121.

Still as shown in FIG. 4, the second filter assembly 102622 includes a third filter 1026221. The third filter 1026221 may be disposed on the mounting surface of the second support 102621. In this way, in the process of preparing the optical device, an assembly angle of the third filter 1026221 may be adjusted by rotating the second support 102621, so that the third filter 1026221 is disposed toward the first filter 1026121, and the third filter 1026221 can reflect, to the first filter 1026121, the light received by the optical interface 1024.

It may be understood that, in the optical devices 102 shown in FIG. 3 and FIG. 4, because the first demultiplexing assembly 10261 is disposed closer to the optical interface 1024 than the second demultiplexing assembly 10262, to make the light that is of the first band and that is reflected by the second filter 1026122 enter the first receiving package structure 1022, the first receiving package structure 1022 is disposed closer to the optical interface 1024 than the second receiving package structure 1023.

In addition, to make the light of the second band and the light of the third band that are received by the optical interface 1024 enter the second receiving package structure 1023 through the second light receiving port 102321 of the second tube cap 10232, the optical device 102 provided in this application further includes a fourth filter 10271. Still as shown in FIG. 4, the fourth filter 10271 is disposed on the inner wall of the tube cavity of the tube body 1021. In this application, the first filter 1026121 may be further configured to reflect the light of the second band and the light of the third band to the fourth filter 10271, and the fourth filter 10271 may be configured to reflect the light of the second band and the light of the third band to the second light receiving port 102321. During specific implementation, a projection of the fourth filter 10271 on the second tube cap 10232 of the second receiving package structure 1023 covers at least a part of the second light receiving port 102321. Based on this, in the process of preparing the optical device, the first demultiplexing assembly 10261 and the second demultiplexing assembly 10262 may rotate, so that the first filter 1026121 can reflect the light of the second band and the light of the third band to the fourth filter 10271, and the fourth filter 10271 reflects the light of the second band and the light of the third band to the second light receiving port 102321.

In addition, still as shown in FIG. 4, a transmission filter 10272 may be further disposed at the first light receiving port 102221 of the first receiving package structure 1022, and the transmission filter 10272 may be configured to transmit the light of the first band. Alternatively, light of a specific wavelength may be transmitted based on a specific requirement. For example, when the light of the first band includes the light with the wavelength of 1284 nm to 1288 nm, the transmission filter 10272 may be configured to make a wavelength with a wavelength of 1286 nm pass through and enter the first receiving package structure 1022.

In the optical device 102 provided in the foregoing embodiment of this application, the light of the first band may be preferentially isolated through splitting, so that an overall size of the optical device 102 can be effectively reduced, to meet a miniaturization design requirement of the optical device 102.

It may be understood from the foregoing descriptions of the design principle of the optical device 102 in this application that, in the process of preparing the optical device 102, optical splitting may be performed on three channels of received light of different bands by adjusting the assembly angles of the first demultiplexing assembly 10261 and the second demultiplexing assembly 10262. Based on this, the first receiving package structure 1022 may be a single receiving package structure in which one optical receiving chip is packaged, or may be a two-in-one receiving package structure. For example, the first receiving package structure 1022 may be a 50G PON and 10G PON receiving package structure. Alternatively, the first receiving package structure 1022 is a 50G PON and GPON receiving package structure. The second receiving package structure 1023 may be a single package structure. In other words, the first optical receiving chip, the second optical receiving chip, and the third optical receiving chip may be combined in any form and then packaged in the first receiving package structure 1022 and the second receiving package structure 1023. Examples are not enumerated one by one herein, but it should be understood that they all fall within the protection scope of this application.

Still as shown in FIG. 3, the optical device 102 provided in this embodiment of this application further includes a first emitting package structure 1028 and a second emitting package structure 1029. The first emitting package structure 1028 is mounted at the other end of the tube body 1021, and the first emitting package structure 1028 and the optical interface 1024 are located at two opposite ends of the tube body 1021. The first emitting package structure 1028 is coaxially disposed with the tube body 1021, and therefore the first emitting package structure 1028 is coaxially disposed with the optical interface 1024. The second emitting package structure 1029 is mounted on the tube wall of the tube body 1021. In addition, the second emitting package structure 1029 is located on a side that is of the second demultiplexing assembly 10262 and that is away from the optical interface 1024.

If the first optical emitting chip and the second optical emitting chip (not shown in FIG. 3) are packaged in the first emitting package structure 1028, the first emitting package structure 1028 may be a two-in-one emitting package structure. During specific implementation, still as shown in FIG. 4, the first emitting package structure 1028 further includes a third tube base 10281 and a third tube cap 10282. The third tube cap 10282 is disposed on the third tube base 10281, the third tube cap 10282 and the third tube base 10281 form a third accommodation cavity, and the third tube cap 10282 is mounted on the tube body 1021, to mount the first emitting package structure 1028 on the tube body 1021. The first optical emitting chip and the second optical emitting chip are accommodated in the third accommodation cavity, and an end portion that is of the third tube cap 10282 and that is connected to the tube body 1021 includes a first optical emitting port 102821. The first optical emitting chip is configured to emit light of a fourth band to the first optical emitting port 102821, and the second optical emitting chip is configured to emit light of a fifth band to the first optical emitting port 102821. For example, the light of the fourth band may include light of 1340 nm to 1344 nm, and the light of the fifth band may include light of 1480 nm to 1490 nm. In this case, the first emitting package structure 1028 is a GPON and 50G PON two-in-one emitting package structure.

A third optical emitting chip (not shown in FIG. 3) is packaged in the second emitting package structure 1029. During specific implementation, still as shown in FIG. 4, the second emitting package structure 1029 further includes a fourth tube base 10291 and a fourth tube cap 10292. The fourth tube cap 10292 is disposed on the fourth tube base 10291, the fourth tube cap 10292 and the fourth tube base 10291 form a fourth accommodation cavity, and the fourth tube cap 10292 is mounted on the tube body 1021, to mount the second emitting package structure 1029 on the tube body 1021. The third optical emitting chip is accommodated in the fourth accommodation cavity, and an end portion that is of the fourth tube cap 10292 and that is connected to the tube body 1021 includes a second optical emitting port 102921. The third optical emitting chip is configured to emit light of a sixth band to the second optical emitting port 102921. For example, the light of the sixth band may include light with a wavelength of 1575 nm to 1580 nm, and the second emitting package structure 1029 may be a 10G PON emitting package structure.

It should be noted that, in the optical device 102, emission light of the 50G PON is transmitted along a main optical path of the optical device 102. This facilitates a high frequency feature of the optical device 102, and helps resolve a problem of insufficient performance margin of the optical device 102. In addition, the light of the fourth band may include light of 1340 nm to 1344 nm, the light of the fifth band may include, for example, light of 1575 nm to 1580 nm, and the light of the sixth band may include, for example, light with a wavelength of 1480 nm to 1490 nm. In this case, the first emitting package structure 1028 may alternatively be a 10G PON and 50G PON two-in-one emitting package structure, and the second emitting package structure 1029 may alternatively be a GPON emitting package structure. Alternatively, the light of the fourth band may include light of 1480 nm to 1490 nm, the light of the fifth band may include, for example, light of 1575 nm to 1580 nm, and the light of the sixth band may include, for example, light of 1340 nm to 1344 nm. In this case, the first emitting package structure 1028 may alternatively be a 10G PON and GPON two-in-one emitting package structure, and the second emitting package structure 1029 may alternatively be a 50G PON emitting package structure. In addition, the first optical emitting chip, the second optical emitting chip, and the third optical emitting chip may alternatively be packaged in the first emitting package structure 1028 and the second emitting package structure 1029 in any other combination. Examples are not enumerated one by one herein. In addition, in the foregoing embodiment of this application, the first emitting package structure 1028 is mounted at an end portion of the tube body 1021. In another possible embodiment of this application, the first emitting package structure 1028 may alternatively be mounted on the tube wall of the tube body 1021.

The optical device 102 shown in FIG. 4 further includes a second lens 1030. The second lens 1030 is accommodated in the tube cavity of the tube body 1021, and the second lens 1030 is connected to a part that is of the tube body 1021 and that is connected to the first emitting package structure 1028, where a connection manner may be but is not limited to welding, bonding, clamping, or the like. In this way, the second lens 1030 is disposed adjacent to the first emitting package structure 1028. In addition, the second lens 1030 and the first emitting package structure 1028 are coaxially disposed, so that the second lens 1030 can collimate the light emitted by the first emitting package structure 1028, and the light emitted by the first emitting package structure 1028 can be transmitted to the outside of the optical device 102 through the optical interface 1024.

Still as shown in FIG. 4, the optical device 102 may further include a first isolator 1031. The first isolator 1031 is accommodated in the tube cavity of the tube body 1021, and the first isolator 1031 is connected to the tube body 1021. The first isolator 1031 and the first emitting package structure 1028 are coaxially disposed, the second lens 1030 is located between the first emitting package structure 1028 and the first isolator 1031, and the second lens 1030 and the first isolator 1031 are adjacently arranged. The first isolator 1031 may be configured to reduce light reflected to the first emitting package structure 1028 in the optical device 102. It should be noted that, in some possible embodiments of this application, the first isolator 1031 may alternatively be located between the first emitting package structure 1028 and the second lens 1030, and does not affect functions of the first isolator 1031 and the second lens 1030.

In addition, the optical device 102 may further include a second isolator 1032. The second isolator 1032 is accommodated in the tube cavity of the tube body 1021, and the second isolator 1032 is connected to a part that is of the tube body 1021 and that is connected to the second emitting package structure 1029. The second isolator 1032 and the second emitting package structure 1029 are coaxially disposed, and the second isolator 1032 may be configured to reduce reflection of light in the optical device 102 to the second emitting package structure 1029.

It should be noted that, in some possible embodiments of this application, the first emitting package structure 1028 and the second emitting package structure 1029 may share a same isolator. During specific implementation, the second isolator 1032 may be omitted, and the first isolator 1031 is moved in a direction of the optical interface 1024, so that the first isolator 1031 isolates a light emitting optical path and a light receiving optical path of the optical device 102, to reduce a quantity of elements of the optical device 102, thereby reducing costs of the optical device 102.

It may be understood that, in the optical device 102 provided in the foregoing embodiment of this application, the light emitted by the first emitting package structure 1028 may be directly transmitted to the optical interface 1024, to be transmitted to the outside of the optical device 102 through the optical interface 1024. Because the second emitting package structure 1029 is disposed on a side portion of the tube body 1021, a transmission direction of the light emitted by the second emitting package structure 1029 is at a specific included angle with the axial direction of the optical interface 1024. To make the light emitted by the second emitting package structure 1029 be transmitted to the optical interface 1024, the optical device 102 may further include a fifth filter 10273. The fifth filter 10273 is disposed at a light emitting port of the first emitting package structure 1028. In addition, a projection of the fifth filter 10273 on the second emitting package structure 1029 covers at least a part of a light emitting port of the second emitting package structure 1029. The fifth filter 10273 may be configured to reflect, to the optical interface 1024, the light emitted by the second emitting package structure 1029. In addition, the fifth filter 10273 may be further configured to transmit the light emitted by the first emitting package structure 1028.

In the optical device 102 provided in this embodiment of this application, three optical receiving chips may be packaged by using the two receiving package structures: the first receiving package structure 1022 and the second receiving package structure 1023, to receive three channels of light of different bands. This can help implement a miniaturization design of the optical device 102. In addition, in the process of preparing the optical device 102, assembly angles of a plurality of filters can be adjusted by designing the first demultiplexing assembly 10261 and the second demultiplexing assembly 10262, and an adjustment tolerance of three channels of received light can be effectively reduced, to implement effective optical splitting on the three channels of received light. In addition, the three optical emitting chips may be further packaged in the optical device 102 through the two receiving package structures: the first emitting package structure 1028 and the second emitting package structure 1029, to emit three channels of light of different bands. Therefore, the optical device 102 provided in this embodiment of this application can integrate three receiving optical paths and three emitting optical paths, so that compatibility between three generations of network services can be implemented, to implement smooth upgrade between different generations of network services.

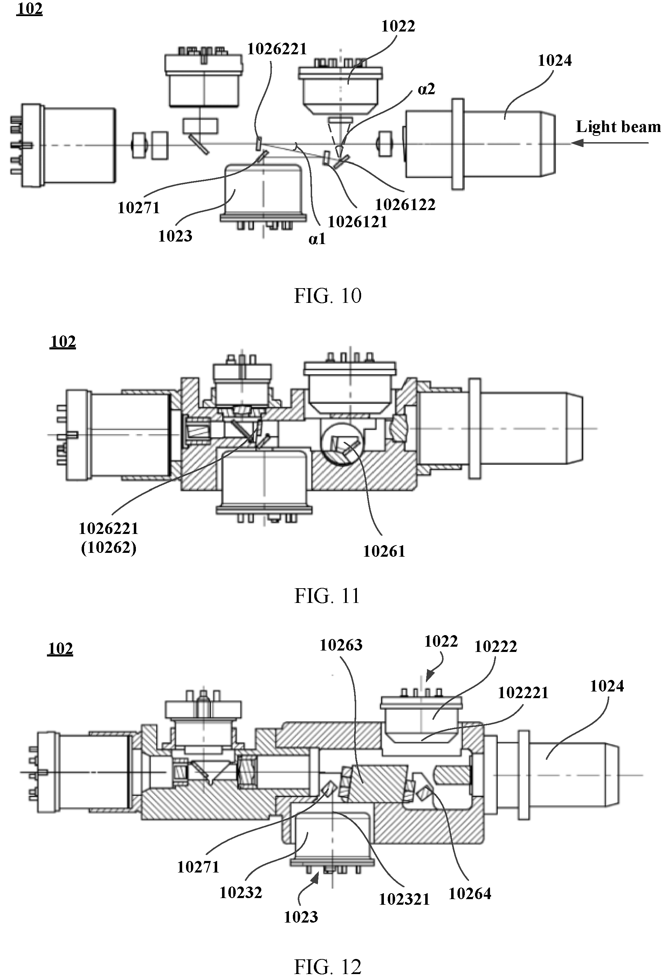

After the structure of the optical device 102 provided in this embodiment of this application and a principle that the optical device 102 can implement optical splitting on three receiving optical paths of different bands are understood, the following briefly describes a method of preparing the optical device 102. FIG. 9 is a diagram of a method of preparing an optical device according to an embodiment of this application. For understanding of the preparation method, refer to FIG. 10. FIG. 10 is a diagram of a simplified structure of the optical device 102 shown in FIG. 4, and the tube body is omitted in FIG. 10. The preparation method may include the following steps.

Step S101: As shown in FIG. 10, introduce a light beam including light of the first band, light of the second band, and light of the third band to the optical device 102 through the optical interface 1024.

Step S102: Make at least one of the first demultiplexing assembly 10261 and the second demultiplexing assembly 10262 rotate relative to the tube body 1021.

During specific implementation, refer to the optical devices 102 shown in FIG. 3 and FIG. 4. In this case, in step S102, at least one of the first support 102611 and the second support 102621 may rotate relative to the tube body 1021 by using the rotation tool, to adjust assembly angles of the first filter 1026121, the second filter 1026122, and the third filter 1026221. In this way, an included angle α1 between an incident direction of the light beam shown in FIG. 10 and a reflection direction in which the third filter 1026221 reflects the light beam and an included angle α2 of the light that is of the first band and that is reflected by the second filter 1026122 are adjusted, so that the light of the first band can be transmitted to the first receiving package structure 1022. In addition, in the process of adjusting the first demultiplexing assembly 10261 and the second demultiplexing assembly 10262, angles at which the first filter 1026121 reflects the light of the second band and the light of the third band may be further adjusted, so that the light of the second band and the light of the third band that are reflected by the first filter 1026121 can enter the second receiving package structure 1023.

In this embodiment of this application, in the process of adjusting the first support 102611 and the second support 102621, an acute included angle between a plane on which the first filter 1026121 is located and a plane perpendicular to an axis line of the tube body 1021 may be less than or equal to 25°, and an acute included angle between a plane on which the third filter 1026221 is located and the plane perpendicular to the axis line of the tube body 1021 is less than or equal to 25°. In this way, a spacing between the first demultiplexing assembly 10261 and the second demultiplexing assembly 10262 in each direction can be small, thereby helping reduce a size of the optical device 102.

In addition, in this application, the optical device 102 may include a fourth filter 10271, and the fourth filter 10271 may be configured to reflect the light of the second band and the light of the third band to the second receiving package structure 1023. In his case, in step S102, when the first demultiplexing assembly 10261 and the second demultiplexing assembly 10262 rotate relative to the tube body 1021, a disposing position and a disposing angle of the fourth filter 10271 in the tube cavity of the tube body 1021 may be further adjusted. In this way, the light of the second band and the light of the third band that are reflected by the first filter 1026121 can enter the fourth filter 10271, so that the fourth filter 10271 can reflect the light of the second band and the light of the third band to the second receiving package structure 1023.

Step S103: Fasten the first demultiplexing assembly 10261 and the second demultiplexing assembly 10262 to the tube body 1021 when it is detected that the first receiving package structure 1022 receives the light of the first band and that the second receiving package structure 1023 receives the light of the second band and the light of the third band.

It should be noted that a manner of fastening the first demultiplexing assembly 10261 and the second demultiplexing assembly 10262 to the tube body 1021 is not limited in this application, and may be, for example, bonding, welding, or fastener locking.

Based on the descriptions of the structures of the first demultiplexing assembly 10261 and the second demultiplexing assembly 10262 and the optical splitting principles of the first demultiplexing assembly 10261 and the second demultiplexing assembly 10262 in the foregoing embodiments of this application, some adaptive variations may be further made to disposing manners of the first demultiplexing assembly 10261 and the second demultiplexing assembly 10262. For example, FIG. 11 is a sectional view of another structure of the optical device 102 according to an embodiment of this application. In comparison with the optical device shown in FIG. 4, in the optical device 102 shown in FIG. 11, the third filter 1026221 of the second demultiplexing assembly 10262 is directly disposed on the inner wall of the tube cavity of the tube body 1021, that is, the second support 102621 is omitted. In addition, the first demultiplexing assembly 10261 of the optical device 102 shown in FIG. 11 may be disposed with reference to the optical device 102 shown in FIG. 4. Details are not described herein again.

It may be understood that, in the process of preparing the optical device 102 shown in FIG. 11, only the first support 102611 of the first demultiplexing assembly 10261 needs to rotate, so that preparation steps of the optical device 102 can be effectively simplified. Any other structure in the optical device 102 shown in FIG. 11 may be disposed with reference to the optical device 102 shown in FIG. 4. Details are not described herein again. In addition, in a possible embodiment of this application, the first support 102611 may not be disposed on the first demultiplexing assembly 10261 of the optical device 102, and the second support 102621 may be disposed on the second demultiplexing assembly 10262. In this case, in the process of preparing the optical device 102, only the second support 102621 of the second demultiplexing assembly 10262 needs to rotate, to simplify preparation steps of the optical device 102.

Based on the disposing manner of the optical device 102 provided in the foregoing embodiment, in a possible embodiment of this application, the second filter 1026122 of the first demultiplexing assembly 10261 may be directly disposed on the inner wall of the tube cavity of the tube body 1021, rather than being disposed on the first support 102611. On this basis, the optical device 102 provided in this embodiment of this application may further have other possible variations, which are not described one by one herein.

FIG. 12 is a sectional view of another structure of the optical device 102 according to an embodiment of this application. In the optical device 102 shown in FIG. 12, the optical device 102 includes a zblock assembly 10263 and a sixth filter 10264. The sixth filter 10264 is disposed closer to the optical interface 1024 than the zblock assembly 10263, the zblock assembly 10263 is mounted in the tube cavity of the tube body 1021, and in the process of preparing the optical device 102, the zblock assembly 10263 may rotate relative to the tube body 1021 or move relative to the tube body 1021 in any direction. The sixth filter 10264 may be disposed on the inner wall of the tube cavity of the tube body 1021, and a projection of the sixth filter 10264 on the first tube cap 10222 of the first receiving package structure 1022 covers at least a part of the first light receiving port 102221.

In addition, some adaptive variations may be further made based on the structure design of the optical device 102 shown in FIG. 12. For example, the optical device 102 may further include a third support. The third support may be disposed with reference to the first support and the second support in the foregoing embodiments. Details are not described herein again. In this case, the sixth filter 10264 may be disposed on the third support, so that in the process of preparing the optical device 102, an angle of the sixth filter 10264 may be adjusted by rotating the third support, to improve optical splitting accuracy of the optical device 102.

In the optical device 102 shown in FIG. 12, the zblock assembly 10263 is configured to reflect, to the sixth filter 10264, the light that is of the first band and that is received by the optical interface 1024, and is configured to reflect, to the fourth filter 10271, the light of the second band and the light of the third band that are received by the optical interface 1024. In addition, the sixth filter 10264 is configured to reflect, to the first light receiving port 102221 of the first tube cap 10222 of the first receiving package structure 1022, the light that is of the first band and that is reflected by the zblock assembly 10263.

In addition, the fourth filter 10271 of the optical device 102 may be configured to reflect, to the second light receiving port 102321 of the second tube cap 10232 of the second receiving package structure 1023, the light of the second band and the light of the third band that are reflected by the zblock assembly 10263. The fourth filter 10271 may be disposed with reference to the foregoing embodiments. Details are not described herein again.

In the optical device 102 shown in FIG. 12, a multi-reflection feature of the zblock assembly 10263 may be used to implement a narrowband band-stop optical splitting function of the zblock assembly, to enhance optical splitting isolation performance of the optical device 102, thereby improving optical splitting precision of three channels of received light of different bands. In this way, the adjustment tolerance of the three channels of received light can be effectively reduced, to implement effective optical splitting on the three channels of received light.

Any other structure in the optical device 102 shown in FIG. 12 may be disposed with reference to the optical device 102 provided in any one of the foregoing embodiments. Details are not described herein again.

An optical splitting manner of the optical device 102 provided in this embodiment of this application is not limited thereto. A person skilled in the art may make a series of variations based on this, but it should be understood that the variations fall within the protection scope of this application.

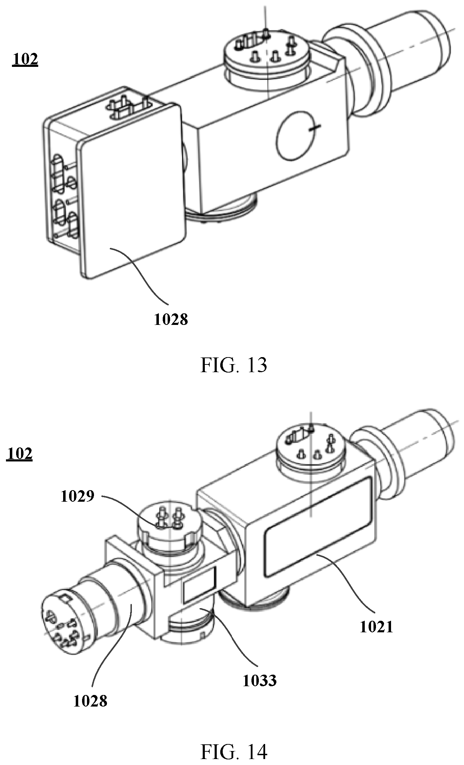

In addition, in this embodiment of this application, to reduce the size of the optical device 102, the emitting package structure of the optical device 102 may alternatively include only the first emitting package structure 1028. In the optical device 102 shown in FIG. 13, the first optical emitting chip, the second optical emitting chip, and the third optical emitting chip all may be packaged in the first emitting package structure 1028, so that the size of the optical device 102 can be effectively reduced. It should be noted that, in the optical device 102 shown in FIG. 13, the first emitting package structure 1028 may be a BOX package structure. In another possible embodiment, the first emitting package structure 1028 may alternatively be a package structure in another possible form. Examples are not enumerated one by one herein. Any other structure in the optical device 102 shown in FIG. 13 may be disposed with reference to the optical device 102 provided in any one of the foregoing embodiments. Details are not described herein again.

In addition, FIG. 14 is a diagram of another structure of the optical device 102 according to an embodiment of this application. The optical device 102 may include the first emitting package structure 1028, the second emitting package structure 1029, and the third emitting package structure 1033. The first emitting package structure 1028 is still disposed at the other end of the tube body 1021, and is coaxially disposed with the tube body 1021. The second emitting package structure 1029 and the third emitting package structure 1033 may be mounted on the tube wall of the tube body 1021.

In addition, in the optical device 102 shown in FIG. 14, only the first optical emitting chip is packaged in the first emitting package structure 1028, the second optical emitting chip is packaged in the second emitting package structure 1029, and the third optical emitting chip is packaged in the third emitting package structure 1033. In this case, the first emitting package structure 1028, the second emitting package structure 1029, and the third emitting package structure 1033 are all single emitting package structures, so that each emitting package structure can be flexibly disposed while the optical device 102 integrates three receiving optical paths.

The optical device 102 provided in this embodiment of this application may be applied to the optical module 1 shown in FIG. 2. Because the optical device 102 provided in this application can integrate three receiving optical paths and three emitting optical paths, compatibility between three generations of network services can be implemented. In this way, smooth upgrade between different generations of network services is implemented, so that the optical module 1 can be better compatible with different generations of network services.

In addition, the optical device 102 provided in this embodiment of this application may be applied to an optical network apparatus. The optical network apparatus may be specifically an optical line terminal 100 or an optical network unit 200. Because the optical device 102 provided in this application can integrate three receiving optical paths and three emitting optical paths, compatibility between three generations of network services can be implemented. In this way, smooth upgrade between different generations of network services is implemented, so that the optical network apparatus can be better compatible with different generations of network services.

The optical device 102 and the optical module 1 provided in embodiments of this application may be applied to the optical communication system shown in FIG. 1. Specifically, the optical line terminal device 100 may include the optical device 102 or the optical module 1. Alternatively, the optical network unit 200 may include the optical device 102 or the optical module 1. In the optical communication system provided in this application, the optical line terminal device 100 is connected to the plurality of optical network units 200 in a point-to-multipoint manner through the passive optical distribution network device 300. The optical line terminal device 100 and the optical network unit 200 may communicate with each other by using a TDM mechanism, a WDM mechanism, or a hybrid TDM/WDM mechanism. A direction from the optical line terminal device 100 to the optical network unit 200 is defined as a downstream direction, and a direction from the optical network unit 200 to the optical line terminal device 100 is defined as an upstream direction.

A passive optical communication system may be a communication network that does not need any active component to implement data distribution between the optical line terminal device 100 and the optical network unit 200. In a specific embodiment, data distribution between the optical line terminal device 100 and the optical network unit 200 may be implemented through the passive optical distribution network device 300. The passive optical communication system may be an asynchronous transfer mode passive optical network (ATM PON) system or a broadband passive optical network (BPON) system defined in the ITU-T G.983 standard, a gigabit-capable passive optical network (GPON) system defined in the ITU-TG.984 standards, an Ethernet passive optical network (EPON) defined in the IEEE 802.3ah standard, a wavelength division multiplexing passive optical network (WDM PON) system, a next generation access passive optical network (NGA PON system, for example, an XGPON system defined in the ITU-T G.987 standards, a 10G EPON system defined in the IEEE 802.3av standard, and a hybrid TDM/WDM PON system), or the like. All content of various passive optical communication systems defined in the foregoing standards is incorporated in this application document by reference.

The optical line terminal device 100 is usually located at a central location (for example, a central office (CO)), and may centrally manage a plurality of optical network units 200. The optical line terminal device 100 may serve as a medium between the optical network unit 200 and an upper-layer network (not shown in the figure), forward data received from the upper-layer network as downstream data to the optical network unit 200, and forward upstream data received from the optical network unit 200 to the upper-layer network. A specific structural configuration of the optical line terminal device 100 may vary with a specific type of the passive optical communication system. In an embodiment, the optical line terminal device 100 includes the optical device 102 and a data processing module (not shown in the figure). The optical device 102 may convert downstream data processed by the data processing module into a downstream optical signal, and send the downstream optical signal to the optical network unit 200 through the passive optical distribution network device 300; and receive an upstream optical signal sent by the optical network unit 200 through the passive optical distribution network device 300, convert the upstream data signal into an electrical signal, and provide the electrical signal to the data processing module for processing.

The optical network units 200 may be disposed at locations on a user side (for example, customer premises) in a distributed manner. The optical network unit 200 may be a network device configured to communicate with the optical line terminal device 100 and a user. Specifically, the optical network unit 200 may serve as a medium between the optical line terminal device 100 and the user. For example, the optical network unit 200 may forward downstream data received from the optical line terminal device 100 to the user, and forward data received from the user as upstream data to the optical line terminal device 100. A specific structure configuration of the optical network unit 200 may vary with a specific type of the passive optical communication system. In an embodiment, the optical network unit 200 includes the optical device 102, and the optical device 102 is configured to receive a downstream data signal sent by the optical line terminal device 100 through the passive optical distribution network device 300, and send an upstream data signal to the optical line terminal device 100 through the passive optical distribution network device 300.

The passive optical distribution network device 300 may be a data distribution system, and may include an optical fiber, an optical coupler, an optical multiplexer/demultiplexer, an optical splitter, and/or another device. In an embodiment, the optical fiber, the optical coupler, the optical multiplexer/demultiplexer, the optical splitter, and/or the another device each may be a passive optical device. Specifically, the optical fiber, the optical coupler, the optical multiplexer/demultiplexer, the optical splitter, and/or the another device each may be a component for distributing data signals between the optical line terminal device 100 and the optical network units 200 without power supply support. In addition, in another embodiment, the passive optical distribution network device 300 may further include one or more processing devices, for example, an optical amplifier or a relay device (relay device). In a branch structure shown in FIG. 1, the passive optical distribution network device 300 may specifically extend from the optical line terminal device 100 to the plurality of optical network units 200, or may be configured as any other point-to-multipoint structure.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical device, comprising a tube body, a first receiving package structure, a second receiving package structure, and a first emitting package structure, wherein
the first receiving package structure comprises a first tube base, a first tube cap, and a first optical receiving chip, the first tube cap is disposed on the first tube base, the first tube cap and the first tube base form a first accommodation cavity, the first tube cap is mounted on the tube body, an end portion that is of the first tube cap and that is connected to the tube body comprises a first light receiving port, the first optical receiving chip is accommodated in the first accommodation cavity, and the first optical receiving chip is configured to receive light of a first band from the first light receiving port;
the second receiving package structure comprises a second tube base, a second tube cap, a second optical receiving chip, and a third optical receiving chip, the second tube cap is disposed on the second tube base, the second tube cap and the second tube base form a second accommodation cavity, the second tube cap is mounted on the tube body, an end portion that is of the second tube cap and that is connected to the tube body comprises a second light receiving port, the second optical receiving chip and the third optical receiving chip are accommodated in the second accommodation cavity, the second optical receiving chip is configured to receive light of a second band from the second light receiving port, and the third optical receiving chip is configured to receive light of a third band from the second light receiving port; and
the first emitting package structure comprises a third tube base, a third tube cap, a first optical emitting chip, and a second optical emitting chip, the third tube cap is disposed on the third tube base, the third tube cap and the third tube base form a third accommodation cavity, the third tube cap is mounted on the tube body, an end portion that is of the third tube cap and that is connected to the tube body comprises a first optical emitting port, the first optical emitting chip and the second optical emitting chip are accommodated in the third accommodation cavity, the first optical emitting chip is configured to emit light of a fourth band to the first optical emitting port, and the second optical emitting chip is configured to emit light of a fifth band to the first optical emitting port.

2. The optical device according to claim 1, wherein the first emitting package structure further comprises a third optical emitting chip, the third optical emitting chip is accommodated in the third accommodation cavity, and the third optical emitting chip is configured to emit light of a sixth band to the first optical emitting port.

3. The optical device according to claim 1, wherein the optical device further comprises a second emitting package structure, the second emitting package structure comprises a fourth tube base, a fourth tube cap, and a third optical emitting chip, the fourth tube cap is disposed on the fourth tube base, the fourth tube cap and the fourth tube base form a fourth accommodation cavity, the fourth tube cap is mounted on the tube body, an end portion that is of the fourth tube cap and that is connected to the tube body comprises a second optical emitting port, the third optical emitting chip is accommodated in the fourth accommodation cavity, and the third optical emitting chip is configured to emit light of a sixth band to the second optical emitting port.

4. The optical device according to claim 2 or 3, wherein the light of the fourth band comprises light with a wavelength of 1340 nm to 1344 nm, the light of the fifth band comprises light with a wavelength of 1480 nm to 1490 nm, and the light of the sixth band comprises light with a wavelength of 1575 nm to 1580 nm; or
the light of the fourth band comprises light with a wavelength of 1340 nm to 1344 nm, the light of the fifth band comprises light with a wavelength of 1575 nm to 1580 nm, and the light of the sixth band comprises light with a wavelength of 1480 nm to 1490 nm; or
the light of the fourth band comprises light with a wavelength of 1480 nm to 1490 nm, the light of the fifth band comprises light with a wavelength of 1575 nm to 1580 nm, and the light of the sixth band comprises light with a wavelength of 1340 nm to 1344 nm.

5. The optical device according to any one of claims 1 to 4, wherein the first tube cap of the first receiving package structure and the second tube cap of the second receiving package structure are mounted on a tube wall of the tube body.

6. The optical device according to any one of claims 1 to 5, wherein the third tube cap of the first emitting package structure is mounted at an end portion of the tube body, or the third tube cap of the first emitting package structure is mounted on the tube wall of the tube body.

7. The optical device according to any one of claims 1 to 6, wherein the optical device further comprises an optical interface, the optical interface is mounted at an end portion of the tube body, and the optical interface is configured to receive light from outside of the optical device.

8. The optical device according to claim 7, wherein the optical device further comprises a first demultiplexing assembly and a second demultiplexing assembly; the first demultiplexing assembly is disposed closer to the optical interface than the second demultiplexing assembly in an axial direction of the tube body; the first demultiplexing assembly and the second demultiplexing assembly are mounted on the tube wall of the tube body; the second demultiplexing assembly is configured to reflect, to the first demultiplexing assembly, the light received by the optical interface; the first demultiplexing assembly is configured to reflect, to the first light receiving port of the first tube cap, the light that is of the first band and that is reflected by the second demultiplexing assembly; and the first demultiplexing assembly is configured to reflect, to the second light receiving port of the second tube cap, the light of the second band and the light of the third band that are reflected by the second demultiplexing assembly.

9. The optical device according to claim 8, wherein the first demultiplexing assembly comprises a first support, a first filter, and a second filter; the tube wall comprises a first mounting hole; the first support is mounted in the first mounting hole; the first filter is disposed on the first support; the first filter is configured to transmit the light of the first band, and is configured to reflect the light of the second band and the light of the third band to the second light receiving port of the second tube cap; the second filter is disposed closer to the optical interface than the first filter; a projection of the second filter on the first tube cap covers at least a part of the first light receiving port; and the second filter is configured to reflect, to the first light receiving port, the light that is of the first band and that is transmitted by the first filter.

10. The optical device according to claim 9, wherein the second filter is disposed on the first support, or the second filter is disposed on an inner wall of a tube cavity of the tube body.

11. The optical device according to any one of claims 8 to 10, wherein the second demultiplexing assembly comprises a second support and a third filter; and
the tube wall of the tube body further comprises a second mounting hole, the first mounting hole and the second mounting hole are adjacently arranged in the axial direction of the tube body, the second support is mounted in the second mounting hole, the third filter is disposed on the second support, and the third filter is configured to reflect, to the first filter, the light received by the optical interface.

12. The optical device according to any one of claims 8 to 10, wherein the second demultiplexing assembly comprises a third filter, the third filter is disposed on the inner wall of the tube cavity of the tube body, and the third filter is configured to reflect, to the first filter, the light received by the optical interface.

13. The optical device according to claim 11 or 12, wherein an acute included angle between a plane on which the first filter is located and a plane perpendicular to an axis line of the tube body is less than or equal to 25°, and an acute included angle between a plane on which the third filter is located and the plane perpendicular to the axis line of the tube body is less than or equal to 25°.

14. The optical device according to claim 7, wherein the optical device comprises a zblock assembly and a sixth filter, the sixth filter is disposed closer to the optical interface than the zblock assembly in an axial direction of the tube body, the zblock assembly is mounted in a tube cavity of the tube body, the sixth filter is disposed on an inner wall of the tube cavity of the tube body, and a projection of the sixth filter on the first tube cap covers at least a part of the first light receiving port; and
the zblock assembly is configured to reflect, to the sixth filter, the light that is of the first band and that is received by the optical interface, and is configured to reflect, to the second light receiving port of the second tube cap, the light of the second band and the light of the third band that are received by the optical interface; and the sixth filter is configured to reflect, to the first light receiving port of the first tube cap, the light that is of the first band and that is reflected by the zblock assembly.

15. The optical device according to any one of claims 7 to 14, wherein the first receiving package structure is disposed closer to the optical interface than the second receiving package structure in the axial direction of the tube body.

16. The optical device according to any one of claims 1 to 15, wherein the optical device further comprises a fourth filter, the fourth filter is disposed on the inner wall of the tube cavity of the tube body, a projection of the fourth filter on the second tube cap covers at least a part of the second light receiving port, and the fourth filter is configured to reflect the light of the second band and the light of the third band to the second light receiving port.

17. The optical device according to any one of claims 1 to 16, wherein the light of the first band comprises light with a wavelength of 1284 nm to 1288 nm, the light of the second band comprises light with a wavelength of 1290 nm to 1330 nm, and the light of the third band comprises light with a wavelength of 1260 nm to 1280 nm.

18. An optical module, comprising a housing and the optical device according to any one of claims 1 to 17, wherein the optical device is accommodated in the housing, the housing has an optical port, and the optical port is connected to a communication optical cable.

19. An optical communication system, wherein the optical communication system comprises an optical line terminal device and an optical network unit, the optical line terminal device is connected to the optical network unit through a passive optical distribution network device, and the optical line terminal device comprises the optical device according to any one of claims 1 to 17 or the optical module according to claim 18, or the optical network unit comprises the optical device according to any one of claims 1 to 17 or the optical module according to claim 18.
